# EUROPEAN PATENT SPECIFICATION

(11) **EP 1 368 776 B1**
(45) Date of publication and mention of the grant of the patent: **25.02.2004**
(21) Application number: 01910087.4
(22) Date of filing: 14.03.2001
(51) Int. Cl.: G06K 1/00

(54) **METHOD FOR PROVIDING IDENTIFICATION CODES FOR ARTICLES**
VERFAHREN ZUR ERZEUGUNG VON IDENTIFIKATIONS-KODES FÜR ARTIKEL
PROCEDE PERMETTANT DE FOURNIR DES CODES D'IDENTIFICATION A DES ARTICLES

(43) Date of publication of application: 10.12.2003
(73) Proprietor: Orell Füssli Security Documents AG, 8003 Zürich (CH)
(72) Inventor: TOEDTLI, Sergej, 8835 Wollerau (CH)
(74) Representative: Blum, Rudolf Emil Ernst
(86) International application number: PCT/IB2001/000359
(87) International publication number: WO 2002/073510

(56) References cited:
- EP-A- 0 654 747
- EP-A- 0 957 459
- US-A- 5 621 864

## Description

### Technical Field

The invention relates to a method for providing identification codes for articles as well as a corresponding computer program according to the preamble of the independent claims.

### Background Art

Security systems are often based on attributing unique identification codes to articles. For example, EP 957 459 describes a system for verifying ownership of articles where a unique article number is affixed to each article. In addition to this, a certificate carrying a certification number is provided for each article. For verifying ownership of an article, both numbers are transferred to a database where they are checked.

Systems of this type require the identification codes (such as the article numbers or certification numbers of EP 957 459) to be stored in the records of a database.

The database must be secured against any possible attacks. For example, a fraudulent party may try to enter forged identification codes of their own into the database, e.g. by gaining access to the database using stolen passwords or insider information.

To secure the database, it has therefore been necessary to provide complicated measures, such as a strict control of passwords, a secure computing environment, etc. Such measures tend to make the process of using the database complicated and expensive.

### Disclosure of Invention

The problem to be solved by the present invention is therefore to provide a method and computer program of the type above that makes the database more secure without rendering access thereto more complicated.

This problem is solved by the independent claims.

Hence, the identification code is generated in a process running on a computer. It is transferred to an output device, such as a printer, for physically attributing the code to the article. Furthermore, the process instructs the database via a programming interface to generate a new record containing the identification code. The database does not contain any user interface for setting and/or modifying the identification code.

The process generating the code can e.g. be part of the database, for example in the form of a script running in the database, and the programming interface that it uses may be an interface provided to scripts for creating records. The process may, however, also be a separate application and the programming interface may consist of events the application sends to the database.

This set-up makes it virtually impossible for a third party to enter false identification codes into the database. Even if they do gain access to the database, the database offers no user interface for modifying the identification code of a record, nor for setting the code by generating a new record with a desired identification code.

Preferably, a physical representation of the identification code is generated. This physical representation is read, e.g. by a scanner, and, if it has been read successfully, it is recorded in the database that the physical representation of the identification code has been generated successfully.

Similarly, the physical representation of the identification code can be attached to an article. The attached physical representation is read, e.g. by a scanner, and, if it has been read successfully, it is recorded in the database that the physical representation of the identification code has been attached to the article.

Both these measures allow a tight control over the distribution and usage of the identification code.

### Brief Description of Drawings

The invention will be better understood and objects other than those set forth above will become apparent when consideration is given to the following detailed description thereof. Such description makes reference to the annexed drawings, wherein:
Fig. 1 shows a schematic representation of a manufacturing process
Fig. 2 an example of a record of the database, and
Fig. 3 a schematic representation of the architecture of the database.

### Best Mode for Carrying Out the Invention

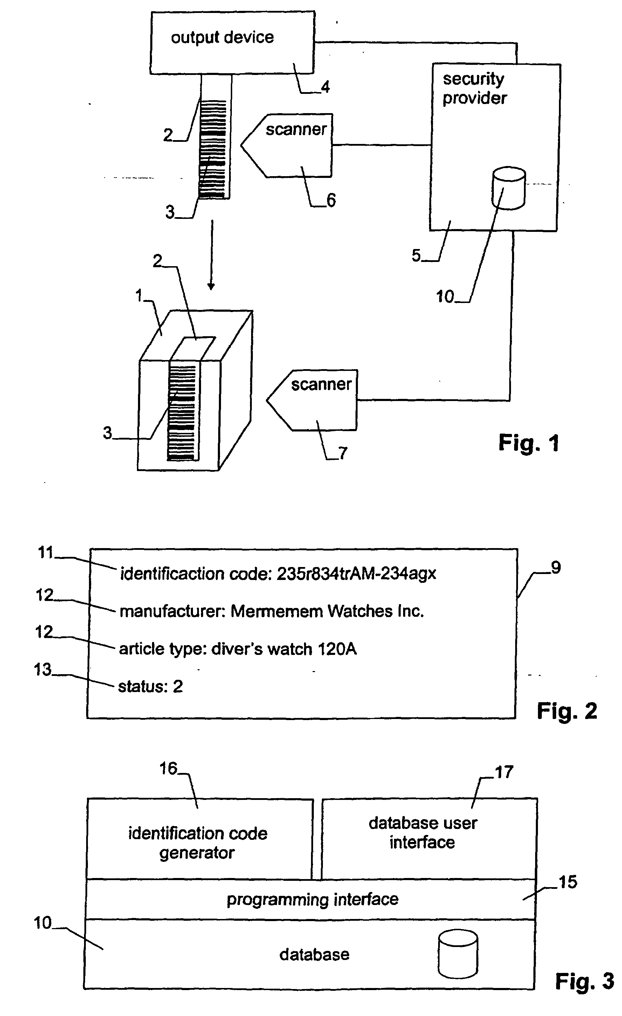

A possible process for marking articles 1 with identification codes is shown in Fig. 1. In this example, the identification codes are encoded as bar codes 3 and printed onto labels 2. The labels are then affixed to the articles 1, e.g. by gluing.

As it is known to a person skilled in the art, there are various further methods for generating a physical representation of an identification code and attributing it to an article. For example, the identification code may also be written onto a magnetic storage medium or into an electronic tag. In addition to this, or as an alternative, the identification code can also be printed in human readable form.

The generation of the identification code is controlled by a security provider 5 in a manner described below.

Generated identification codes are sent to an output device 4, which prints them onto the labels 2 as a bar code 3. This can take place either at the security provider's site, at the site of the manufacturer of the articles, or at the site of a dedicated label manufacturer.

The process of manufacturing the labels 2 is monitored by a first scanner 6, which reads the printed labels 2 and sends the read data to the security provider 5 so that the latter knows if a label has been created successfully.

The labels 2 are then e.g. transferred to the site of the manufacturer of the articles 1. There, they are attached to the articles 1, e.g. by gluing. Affixing the labels 2 to the articles 1 is monitored by a second scanner 7, which reads the labels 2 attached to the articles 1 and sends the corresponding data to the security provider 5 to let him know that the identification code has been attached successfully to an article.

Security provider 5 runs a database 10 for storing the generated identification codes and any further pertinent information.

Fig. 2 shows an example record 9 as it could be stored in database 10 for each identification code. The record contains the identification code 11, information 12 identifying the manufacturer and article it has been attributed to, and a status code 13. This status code can e.g. be set to 1 upon generation of the record, to 2 when the identification code has been read by first scanner 6 and to 3 when it has been read by second scanner 7. This allows the security provider to keep track of the usage of each identification code and ensures that no codes can be lost between generation and attaching to an article.

For generating registration codes and storing the records 9, the security provider runs a database system as shown in Fig. 3. It consists of the actual database 10 providing a programming interface 15 for creating and modifying records stored therein. This programming interface can e.g. be a defined set of functions or events accessible by processes and applications within and/or without the actual code of the database 10. Corresponding systems are known to a person skilled in the art.

The database and the processes interacting with it as shown in Fig. 3 are running on one or more secure computers under control of security provider 5.

For generating new identification codes 11, a process called "identification code generator" 16 is provided. The identification code generator 16 may e.g. generate pseudo-random numbers with checksum information or any other type of code that is difficult to falsify. Each code is unique. If the codes are generated using pseudo-random numbers, it must be checked if a generated code has already been entered into the database before is can be issued.

Once the identification code generator 16 has generated a valid identification code, it sends instructions via programming interface 15 to database 10 to create a new record containing the identification code. The new identification code is also sent to output device 4 for printing.

Database 10 creates a record 9 for the new identification code, enters the information 12 identifying the manufacturer and article (if available at this time) and sets the status to 1.

The record can then be viewed using a database user interface 17, which provides user interface elements for viewing the information in the record. No user interface is provided for changing the security code, though, for the reasons stated above.

In summary, the only way to generate identification codes and enter them in the database 11 is through security code generator 16, which can be operated under strict security conditions only. Identification codes from another source cannot be entered into the database. For each generated identification code, a record is opened which stores the usage of the code over the life cycle of the articles.

For controlling the authenticity of an article, the identification code attached to the article can be sent to security provider 5, who will check if a corresponding record 9 exists and what the status of the code is. If the status shows that the identification code has been validly affixed to an authentic article and has not been abused, security provider 5 can affirm the authenticity of the article.

In conventional systems, where a large number of manufacturing sites exists, it may be easy to feed unauthorized codes to the database. In the present system, this is impossible because the database can only create records for the security codes generated by security code generator 16.

The present invention can be implemented as computer program comprising the components shown in Fig. 3. Usually, such a computer program will contain first program code means (the security code generator 16) for generating identification codes and for transferring the identification codes to the output device 4. It will further contain second program code means (the code of database 10) for generating and accessing the records (9). Part of these second program code means is the programming interface 15. The first program code means is linked to the second program code means via the programming interface for generating new records containing the identification codes. Finally the computer program comprises third program code means (namely the database user interface 17) for providing the user interface but not providing access to set and/or modify the identification codes in the records. Such a program will usually consist of a plurality of executable files and scripts and will in general be installed on a plurality of networked computers.

## Claims

1. A method for providing identification codes for articles and storing the identification codes in records (9) of a database comprising the steps of
generating, in a process (16) running on a computer, an identification code (11) and
transferring the identification code (11) to an output device (4) for physically attributing the identification code (11) to an article (1),
further **characterized by** the step of
instructing from said process (16), via a programming interface (15), the database (10) to generate a new record (9) containing the identification code (11),
wherein said database (10) comprises no user interface for setting and/or modifying the identification code of a record.

2. The method of claim 1 further comprising the step of
generating a physical representation (2, 3) of the identification code (11) by means of the output device (4),
reading the physical representation (2, 3) of the identification code (11) and recording, in said database (10), that the physical representation of the identification code has been generated successfully.

3. The method of any one of the preceding claims further comprising the steps of
generating a physical representation (2, 3) of the identification code (11) by means of the output device (4),
attaching said physical (2, 3) representation of the identification code (11) to an article (1),
reading the physical representation (2, 3) of the identification code attached to the article (1), and recording, in said database (10), that the physical representation (2, 3) of the identification code (11) has been attached to an article (1) successfully.

4. A computer program for providing identification codes for articles and storing the identification codes in records of a database having a user interface, said computer program comprising
first program code means (16) generating identification codes and transferring the identification codes to an output device for physically attributing the identification code to the article,
second program code means (10) generating and accessing the records (9),
**characterized in that** said second program code means (10) comprise a programming interface (15), wherein said first program code means (16) is linked to the second program code means (10) via said programming interface (15) for generating new records containing said identification codes,
wherein the computer program further comprises third program code means (17) providing the user interface but not providing access to set and/or modify the identification codes in the records (9).

## Patentansprüche

1. Ein Verfahren zum Bereitstellen von Identifikationscodes für Artikel und Speichern der Identifkationscodes in Einträgen (9) einer Datenbank, welches die Schritte aufweist:
Erzeugen eines Identifikationscodes (11) in einem auf einem Computer laufenden Prozess (16) und
Übermitteln des Identifikationscodes (11) an ein Ausgabegerät (4) um den Identifikationscode (11) physisch einem Artikel (1) zuzuordnen,
weiter **gekennzeichnet durch** den Schritt
Instruieren der Datenbank (10) **durch** den Prozess (16) über ein Programmierinterface (15) zur Erzeugung eines neuen Eintrags (9), der den Identifikationscode (11) enthält,
wobei die Datenbank (10) kein Benutzerinterface zum Setzen und/oder Modifizieren des Identifikationscodes eines Eintrags aufweist.

2. Das Verfahren nach Anspruch 1, weiter umfassend die Schritte:
Erzeugen einer physischen Verkörperung (2, 3) des Identifikationscodes (11) mittels des Ausgabegeräts (4),
Ablesen der physischen Verkörperung (2, 3) des Identifikationscodes (11) und Eintragen in der Datenbank (10), dass die physische Verkörperung des Identifikationscodes erfolgreich erzeugt worden ist.

3. Das Verfahren nach einem der vorangehenden Ansprüche, weiter umfassend die Schritte:
Erzeugen einer physischen Verkörperung (2, 3) des Identifikationscodes (11) mittels des Ausgabegeräts (4),
Anbringen der physischen Verkörperung (2, 3) des Identifikationscodes (11) an einem Artikel (1),
Ablesen der am Artikel (1) angebrachten physischen Verkörperung (2, 3) des Identifikationscodes und Eintragen in der Datenbank (10), dass die physische Verkörperung des Identifikationscodes (11) erfolgreich an einem Artikel (1) angebracht worden ist.

4. Ein Computerprogramm zum Bereitstellen von Identifikationscodes für Artikel und zum Abspeichern der Identifikationscodes in Einträgen einer Datenbank mit Einem Benutzerinterface, wobei das Computerprogramm aufweist:
erste Programmcodemittel (16), welche Identifikationscodes erzeugen und die Identifikationscodes an ein Ausgabegerät übermitteln zur physischen Zuordnung der Identifikationscodes zum Artikel,
zweite Programmcodemittel (10), welche die Einträge (9) erzeugen und auf sie zugreifen,
**dadurch gekennzeichnet, dass** die zweiten Programmcodemittel (10) ein Programmierinterface (15) aufweisen, wobei die ersten Programmcodemittel (16) mit den zweiten Programmcodemitteln (10) über dass Programmierinterface (15) verbunden sind um neue Einträge enthaltend Identifikationscodes zu erzeugen,
wobei das Computerprogramm weiter dritte Programmcodemittel (17) umfasst, die das Benutzerinterface bereitstellen aber die keinen Zugriff zum Setzen und/oder Ändern der Identifikationscodes in den Einträgen (9) bereitstellen.

## Revendications

1. Méthode pour produire des codes d'identification pour des articles et pour mémoriser ces codes dans des enregistrements (9) d'une base de données, comportant les étapes suivantes:
générer, au moyen d'un processus (16) effectué par ordinateur, un code d'identification (11) et
transférer ce code d'identification (11) vers un dispositif de sortie (4) pour attribuer de manière physique le code d'identification (11) à un article (1), **caractérisé en ce que**
l'on active au moyen dudit processus (16) et par l'intermédiaire d'un interface programmé (15) la base de données (10) pour qu'elle génère un nouvel enregistrement (9) contenant le code d'identification (11),
la base de données (10) ne comprenant aucun interface accessible à un utilisateur pour créer et/ou modifier le code d'identification d'un enregistrement.

2. Méthode selon la revendication 1 comprenant en outre les étapes suivantes:
production d'une représentation physique (2,3) du code d'identification (11) au moyen du dispositif de sortie (4), et
lecture de la représentation physique (2,3) du code d'identification (11) et mémorisation dans ladite base de données (10) du fait que la représentation physique du code a été réalisée avec succès.

3. Méthode selon une des revendications précédentes, comprenant en outre les étapes suivantes:
production d'une représentation physique (2,3) du code d'identification (11) au moyen du dispositif de sortie (4),
fixation de cette représentation physique (2,3) du code d'identification (11) sur un article (1),
lecture de la représentation physique (2,3) du code d'identification (11) fixée sur l'article (1) et mémorisation dans la base de données (10) du fait que la représentation physique (2,3) du code d'identification (11) a été fixée avec succès sur un article (1).

4. Programme d'ordinateur pour produire des codes d'identification pour des articles et pour mémoriser les codes d'identification dans des enregistrements d'une base de données comportant un interface pour utilisateur, ledit programme comportant
des premiers moyens logiciels (16) pour produire des codes d'identification et pour les transférer vers un dispositif de sortie, afin d'attacher le code d'identification à l'article de manière physique,
des seconds moyens logiciels (10) pour produire les enregistrements (9) et pour y accéder,
**caractérisé en ce que** les seconds moyens logiciels (10) comprennent un interface programmé (15), les premiers moyens logiciels (16) étant connectés aux seconds moyens logiciels (10) par l'intermédiaire de l'interface programmé (15) pour produire de nouveaux enregistrements contenant lesdits codes d'identification,
le programme d'ordinateur comportant en outre des troisièmes moyens logiciels (17) formant l'interface pour utilisateur, mais ne permettant pas un accès pour former et/ou modifier les codes d'identification dans les enregistrements (9).
